Europäisches Patentamt

European Patent Office

Office européen des brevets

(19)

(11) Veröffentlichungsnummer: **0 109 093**
**A1**

# (12) EUROPÄISCHE PATENTANMELDUNG

(21) Anmeldenummer: 83111452.5

(22) Anmeldetag: 15.11.83

(51) Int. Cl.³: **B 62 D 29/04**

(30) Priorität: 15.11.82 AT 4141/82

(43) Veröffentlichungstag der Anmeldung: 23.05.84
Patentblatt 84/21

(84) Benannte Vertragsstaaten: AT CH DE FR GB IT LI NL SE

(71) Anmelder: **Hutter & Schrantz Bautechnik Gesellschaft m.b.H, Raiffeisenstrasse 14, A-9020 Klagenfurt (AT)**

(72) Erfinder: **Artweger, Wolfgang,
A-4580 Windischgarsten 36 (AT)**
Erfinder: **Burger, Anton, Badstrasse 126,
A-4580 Windischgarsten (AT)**

(74) Vertreter: **Wolke, Heidemarie, Dr., Bahnhofstr. 400,
A-4580 Windischgarsten (AT)**

(54) **Verstärkungsvorrichtung für Kabinen, insbesondere Aufbauten auf Lastkraftwagen.**

(57) Es wird eine Verstärkungsvorrichtung für Kabinen (1) beschrieben. Diese Kabinen (1) sind aus mehreren selbsttragenden Verbundplatten (3 bis 7) zusammengesetzt. Die Verbundplatten (3 bis 7) weisen je eine äussere und innere Deckschicht (8 bis 17) auf. Zwischen diesen Deckschichten ist ein Tragkern (18) angeordnet. In den Tragkern (18) sind Verstärkungen eingearbeitet. Diese sind in Längsrichtung (26) der Verbindungsflächen (27 bis 36) der Verbundplatten (3 bis 7), vor allem in deren Übergangsbereich angeordnet und als Verankerungsteile (21 bis 25) ausgebildet. Die Verankerungsteile sind zumindest mit einer der beiden Deckschichten (8 bis 17) verbunden. Weiters sind sie auch zur Aufnahme kraftschlüssiger Verbindungselemente ausgebildet.

Derartige Kabinen werden bevorzugt als Aufbauten für Lastkraftwagen, vor allem für Kühl- und Tiefkühltransporte oder als Kühlcontainer eingesetzt.

EP 0 109 093 A1

Verstärkungsvorrichtung für Kabinen, insbesondere Aufbauten auf Lastkraftwagen

Die Erfindung betrifft eine Verstärkungsvorrichtung für Kabinen, insbesondere Aufbauten auf Lastkraftwagen, die aus mehreren selbsttragenden Verbundplatten zusammengesetzt sind, die je eine äußere und innere Deckschicht aufweisen, zwischen welchen ein Tragkern, insbesondere ein Kunststoff-Tragschaum angeordnet ist, in dem Verstärkungen eingearbeitet sind.

Es sind bereits Verstärkungsvorrichtungen für Kabinen bekannt - gemäß GB-PS 1 187 478 - bei der zwischen der äußeren und der inneren Deckschicht der selbsttragenden Verbundplatten Verstärkungsvorrichtungen eingearbeitet sind. Diese bestehen aus in die Verbundplatte eingearbeiteten, die innere mit der äußeren Deckschicht verbindenden Profilstangen, die meist z-förmig oder I-förmig ausgebildet sind. Sie bestehen meist aus stranggepreßten Aluminiumprofilen und sind mit der äußeren und inneren Deckschicht über mechanische Verbindungselemente, wie Schrauben oder Nieten, verbunden. Der verbleibende Hohlraum zwischen den in den Verbundplatten im Abstand voneinander angeordneten Profilstangen wird nach der Vorfertigung der Wandelemente mittels Kunststoffschaum ausgefüllt. Dazu werden die einzelnen Wände in der Wandgröße entsprechende Formen eingebracht und es wird mit Lanzen das flüssige Kunststoffmaterial in die Hohlräume eingespritzt. Nach dem Einbringen der beiden vermischten Komponenten des Kunststoffschaums kommt es in der Wand zu einer chemischen Reaktion und das flüssige Material schäumt auf und füllt so die Hohlräume zwischen den einzelnen Profilstangen. Nachteilig ist bei dieser Ausführungsform der relativ hohe Arbeitsaufwand zum Herstellen der Verbundplatten, da zuerst die Wand, bestehend aus den beiden Deckschichten, unter Einsatz einer Vielzahl von Profilstangen hergestellt werden muß, wobei die Dimensionierung der Profilstangen und der inneren und äußeren Deckschicht derart erfolgen muß, daß eine ausreichende Festigkeit für einen Transport dieser vorgefertigten Wandelemente erreicht wird. Dies bedingt aber auch ein sehr hohes Gewicht dieser Bauteile, da die große Anzahl der dafür notwendigen Aluminiumprofilstangen und die Dicke der erforderlichen Deckschichten in der Summe beispielsweise bei einem 12 m langen Kühlaufbau für einen Sattelanhänger sehr stark zum Tragen kommt. Weiters ist es bei derart ausgebildeten Kabinen nicht zu umgehen, daß sowohl auf der äußeren, als auch auf der inneren Deckschicht über diese vorstehende Befestigungselemente vorgesehen sind. Es ist bei dieser Konstruktionsvariante aber auch sehr schwierig, entsprechende Einlageteile zur Verstärkung, beispielsweise dann, wenn an den Wänden Einrichtungsgegenstände befestigt werden sollen, einzubauen und zu positionieren.

Ein weiterer Nachteil ist darin zu sehen, daß durch diese Profilstangen eine wärmeleitende Verbindung zwischen der äußeren und inneren Deckschicht hergestellt wird, sodaß es vor allem bei Kühlaufbauten zu Wärmeverlusten bzw. beim Einsatz dieses Bausystems bei Kabinen zu Schwitzwasserbildungen an der Innenwand kommen kann.

Weiters sind Verstärkungsvorrichtungen für Kabinen - gemäß DE-AS 16 09 602 - bekannt, die in den Längskantenbereichen von Einzelplatten, die zu einer Wand einer Kabine zusammengesetzt werden können, angeordnet sind. Nachteilig ist hierbei, daß die Verstärkungen wieder auf den Längskantenbereich der Plattenelemente verteilt sind und somit ein fixer Abstand für Verstärkungen vorgegeben ist. Darüberhinaus entstehen bei der Herstellung von Wandflächen für Kabinen viele Stoßstellen, die nach längerem Betrieb zu Problemen hinsichtlich der Dichtheit gegenüber den äußeren Umwelteinflüssen, aber vor allem auch hinsichtlich des Wärmeverlustes bei Kühlfahrzeugen führen können.

0109093

Der vorliegenden Erfindung liegt numehr die Aufgabe zugrunde, einer Verstärkungsvorrichtung der eingangs genannten Art derart auszubilden, daß bei der Herstellung von großflächigen, einstückigen Verbundplatten eine rasche universelle Platzierung dieser Verstärkungsteile innerhalb der Verbundplatten möglich ist und die Verbundplatten gleichzeitig dicht bzw. gut isolierend sind.

Diese Aufgabe der Erfindung wird dadurch gelöst, daß in Längsrichtung der Verbindungsflächen der Verbundplatten, insbesondere in deren Übergangsbereich, Verankerungsteile vorgesehen sind, die zumindest mit einer der beiden Deckschichten und gegebenenfalls dem Tragschaum verbunden und zur Aufnahme kraftschlüssiger Verbindungselemente ausgebildet sind. Die überraschende Erkenntnis gemäß der vorliegenden Erfindung liegt darin, daß durch die Anordnung mehrerer voneinander distanziert angeordneter Verankerungsteile die Isolierfähigkeit der Platten über einen großen Bereich aufrecht erhalten wird und die Verstärkungsteile nur in jenem Bereich vorgesehen sind, in dem sie zur Montage bzw. Verstärkung der Verbundplatten benötigt werden. Damit wird neben den dadurch erzielten besseren Isoliereigenschaften auch das Gewicht der Verbundplatten niedrig gehalten. Ein weiterer Vorteil dieser Anordnung liegt darin, daß die Anzahl der Verstärkungsteile für jede Verbundplatte auf das unbedingt notwendige Ausmaß beschränkt werden kann, da die Verstärkungsteile keine tragende Funktion zur Herstellung der Verbundplatte ausführen müssen.

Gemäß einem weiteren sehr wichtigen Erfindungsmerkmal ist vorgesehen, daß mehrere in Längsrichtung der Verbindungsflächen voneinander distanziert angeordnete Verankerungsteile vorgesehen sind, wodurch eine gute Kombination zwischen mechanischer Festigkeit und dem Kabinengewicht erzielt wird.

Von Vorteil ist weiters, wenn die Verankerungsteile aus einem nichtmetallischen Werkstoff mit hoher Ausreißfestigkeit, z.B. Holz, Polyamid oder dgl., bestehen. Durch die Ausbildung der Verankerungsteile in nichtmetallischen Werkstoffen wird die Bildung von Kältebrücken zusätzlich vermindert und es wird sichergestellt, daß diese Verankerungsteile zusätzlich in ihrer Verstärkungsfunktion auch zur Verbindung einzelner Verbundplatten bzw. zur Montage und Aufnahme von Lasten herangezogen werden können.

Nach einer weiteren sehr wichtigen Ausführungsform der Erfindung ist vorgesehen, daß die Verankerungsteile durch einen Kunststoff-Schaumblock gebildet sind, in dem Verstärkungsteile zur Aufnahme der kraftschlüssigen Verbindungselemente eingeschäumt sind. Durch das Einschäumen der Verankerungsteile in einen Schaumblock werden die Verankerungsteile positioniert, wodurch die Herstellung der Verbundplatten vereinfacht wird. Darüberhinaus kann durch entsprechende Wahl der Festigkeit des Kunststoffschaumes eine Isolierung auch im Bereich der Verankerungsteile bzw. Verstärkungsteile gleichzeitig zu einer Erhöhung der Festigkeit in diesem Bereich erhalten werden. Es kann somit der Isolationskörper im Verbundelement zusätzlich zur Aufnahme einer Belastung herangezogen werden. Weiters kann dadurch auch sichergestellt werden, daß keine unmittelbare wärmeleitende Verbindung durch den Verankerungsteil zwischen der äußeren und inneren Deckschicht hergestellt wird.

Im Rahmen der Erfindung ist es weiters möglich, daß die Verankerungs- bzw. Verstärkungsteile senkrecht zu den Deckschichten eine geringere Dicke aufweisen als eine Distanz zwischen den beiden Deckschichten und vorzugsweise zumindest einen Teil einer Außenfläche des Verankerungsteiles bilden, wodurch bei ausreichender Festigkeit der Einlageteile eine leitende Verbindung bzw. Wärmebrücke zwischen der äußeren und inneren Deckschicht vermieden wird. Die erforderliche Ausreißfestigkeit wird dabei durch die Größe der Klebefläche zwischen Einlage, Schaumkern und Deckschicht erreicht.

Nach einer weiteren Ausführungsform der Erfindung ist vorgesehen, daß die Verstärkungsteile durch in den Kunststoff-Schaumblock eingeschäumte Metallteile gebildet sind. Durch das Einschäumen der

0109093

Metallteile wird eine leitende Verbindung, insbesondere bei Kühlfahrzeugen, zwischen der inneren und äußeren Deckschicht vermieden und es können für sehr hohe Belastungen nunmehr ohne diesen Nachteil der Kältebrücken Metallteile eingesetzt werden, die knickfest sind und eine gute Ausreißfestigkeit für Verbindungsvorrichtungen aufweisen. Damit werden in vorteilhafter Weise die Vorteile der Kunststoffbauweise mit denen der Metallbauweise kombiniert. Darüberhinaus kann bei schweren Lasten die auf den Verbundplatten montiert werden eine unmittelbare Krafteinleitung von dem auf der Verbundplatte montierten Teil auf den Verstärkungsteil erfolgen und es können somit Kunststoffschäume mit einem geringeren Raumgewicht - und damit einer niederen Druckfestigkeit, aber besseren Isolierfähigkeit - zum Herstellen dieser Verankerungsteile eingesetzt werden.

Im Rahmen der Erfindung ist es weiters auch möglich, daß die Verstärkungsteile durch Platten, Rohre oder Winkel aus Metall bzw. Kunststoff gebildet sind und vorzugsweise mit Ausreißankern, die aus Querstegen, Laschen oder Vorsatzteilen bestehen, versehen sind. Dadurch, daß die Verstärkungsteile in den Schaumblock eingeschäumt sind, können bei gleicher Außenform des Verankerungsteiles verschiedene Verstärkungsteile, die den jeweiligen Festigkeitseigenschaften angepaßt werden können, zum Einsatz gelangen. Trotzdem wird die Positionierung der Verankerungsteile dadurch nicht erschwert. Durch die optimale Abstimmung der Verstärkungsteile auf die geforderten Festigkeitseigenschaften ist auch bei Fahrzeugaufbauten ein Leichtbau möglich, der im Hinblick auf die immer ungünstiger werdende Treibstoffsituation eine höhere Nutzlast bzw. ein niederes Eigengewicht und somit eine Kosteneinsparung sowohl bei Fahrten im beladenen als auch unbeladenen Zustand ermöglicht.

Von Vorteil ist es weiters, wenn der Kunststoff-Schaumblock zumindest eine Dichte aufweist, die höher ist als die des Tragschaumes, insbesondere höher als 80 kg/m$^3$ und vorzugsweise aus einem Hartintegral-Polyurethanschaum besteht, da dadurch der Kunststoffschaum als mittragendes Element zu den eingearbeiteten Verstärkungsteilen herangezogen werden kann. Der überraschende Vorteil der Verwendung von Polyurethanhartintegral-Schaumstoff liegt darin, daß bei Herstellung der Verankerungsteile ein Verbundelement geschaffen wird. Aufgrund der Charakteristiken dieses Kunststoffschaumes beim Aushärten bilden sich zwei harte Deckschichten, zwischen welchen eine weichere Kernschicht (mit niederem Raumgewicht) verbleibt. Da ein Verbundelement bzw. ein sogenanntes Sandwichelement eine höhere Belastbarkeit als ein Vollmaterial ermöglicht, ist eine entsprechend leichtere Dimensionierung der einzuarbeitenden Verstärkungsteile und dadurch eine weitere Gewichtsersparung möglich. Der Vorteil liegt dann darin, daß in der Verbundplatte ein weiteres Verbundelement zur Verstärkung vorgesehen ist, welches trotzdem sehr hohe Isoliereigenschaften aufweist, da das Kernmaterial dieses Schaums ein relativ niederes Raumgewicht und damit eine gute Isolierfähigkeit aufweist.

Weiters ist es gemäß der Erfindung auch möglich, daß der Kunststoff-Schaumblock mit einer rauhen Oberfläche ausgebildet ist, oder in eine zur Aufnahme des Klebers geeignete Folie eingeschäumt ist. Durch die zuletzt genannten Maßnahmen wird eine gute Verklebung der Verankerungsteile mit den Deckschichten bzw. mit den anschließenden Kernmaterialien erreicht, sodaß eine hohe Zug- und Ausreißfestigkeit dieser Teile gegeben ist. Dies trägt wesentlich zur höheren Belastbarkeit dieser Verankerungsteile bei.

Im Rahmen de Erfindung ist es weiters auch möglich, daß die Verankerungs- und bzw. oder Verstärkungsteile zweier zu verbindender Verbundplatten quer zur Verbundplattenlängsrichtung verlaufen sowie im selben Querschnittsbereich angeordnet sind und daß zumindest einer der Verankerungs- und bzw. oder Verstärkungsteile in deren einander zugewandten Endbereichen der Verbundplatten eine Aufnahmeöffnung für einen Montageteil aufweist. Die Anordnung der Verankerungs- bzw. Verstärkungsteile im selben Querschnittsbereich erlaubt die Herstellung einer Rahmenkonstruktion unter Vermeidung von Kältebrücken. Zusätzlich wird dadurch sichergestellt, daß die Verankerungs- bzw.

0109093

Verstärkungsteile untereinander mechanisch verbunden werden können. Dies erleichtert die Herstellung der einzelnen Verbundplatten vor allem beim Zuschneiden auf unterschiedliche Größen.

Weiters ist es auch möglich, daß der Montageteil durch einen Winkel, insbesondere aus einem Flachprofil, gebildet und über Schraubverbindungen mit den Verankerungs- und bzw. oder Verstärkungsteilen verbunden ist, wodurch der Montageteil ohne großen Aufwand an unterschiedliche Festigkeitserfordernisse angepaßt werden kann.

Von Vorteil ist es weiters auch, wenn der Montageteil durch einen Auflagebock gebildet ist, der mit einem, in seinen Abmessungen auf die Aufnahmeöffnungen abgestellten Führungsteil versehen ist. Dies ermöglicht eine Einleitung von Kräften in die Verankerungs- bzw. Verstärkungsteile unter Vermeidung von Kantenpressungen und ohne daß die Teile untereinander mechanisch verbunden werden müssen. Dadurch kann eine Beweglichkeit der Verbundplatten, wie dies bei nicht verwindungssteifen Körpern, beispielsweise bei Aufbauten auf Fahrzeugen manchmal gewünscht wird, beibehalten werden.

Weiters ist es erfindungsgemäß auch möglich, daß die Schraubverbindungen auf den einander zugewandten Seiten der unmittelbar benachbarten Verbundplatten angeordnet sind, wodurch zur Außenwand hin gerichtete Verbindungselemente eingespart und Kältebrücken bzw. Undichtheiten vermieden werden.

Im Rahmen der Erfindung ist es weiters auch möglich, daß der Übergangsbereich zwischen den Verbundplatten mit einem Schutzwinkel abgedeckt ist, der im Endbereich eine schräge Fläche aufweist, die gegenüber den Deckschichten unter einem Winkel von 45° geneigt ist. Die schräge Fläche übt einen Abweisereffekt aus, sodaß vor allem bei Verwendung der erfindungsgemäßen Verstärkungseinrichtung an Aufbauten für Kraftfahrzeuge, beispielsweise beim Anstreifen an Äste oder vorstehende Gebäudeteile, vielfach auch eine Beschädigung des Schutzwinkels hintangehalten werden kann.

Von Vorteil ist eine Ausführungsform, bei der der Verankerungsteil einen parallel zu den Verbindungsflächen verlaufenden Anschlagteil aufweist, der mit einer der Verbundplatten kraftschlüssig verbunden ist und daß die unmittelbar benachbarte Verbundplatte mit einer Ausnehmung zur Aufnahme des Anschlagteiles versehen ist und daß der Anschlagteil vorzugsweise distanziert von den beiden einander zugewandten Deckschichten der einander unmittelbar benachbarten Verbundplatten angeordnet ist. Diese Ausführungsform ermöglicht in bevorzugter Weise das Aufnehmen von hohen, quer zur Längsrichtung der Verbundplatten gerichteten Schubkräften, da sich der Anschlagteil längs der Verbindungsflächen erstreckt. Überdies wird bei einer Distanzierugng des Anschlagteiles von den beiden einander zugewandten Deckschichten erreicht, daß die von der Innenseite her auf die Verbindungsstelle der Verbundplatten ausgeübten Beanspruchungen durch die Zwischenschaltung des Tragschaumes bzw. der inneren Deckschicht der Verbundplatte über einen größeren Flächenbereich aufgeteilt werden und in Verbindung mit dem längsverlaufenden Anschlagteil höhere Flächenpressungen, insbesondere bei Kantenbelastungen, aufgenommen werden können.

Erfindungsgemäß ist es weiters möglich, daß der Anschlagteil durch eine zur Stirnseite einer Verbundplatte fluchtend angeordnete Anschlagleiste gebildet ist, die mit dieser kraftschlüssig verbunden ist, und daß die Breite der Anschlagleiste senkrecht zur Deckschichte einer weiteren Verbundplatte geringer ist als deren Wandstärke, wodurch Kältebrücken im Bereich der Anschlagleisten vermieden werden.

Erfindungsgemäß ist es weiters auch möglich, daß die Anschlagleiste zwischen der äußeren Deckschicht und den von dieser distanzierten Verankerungsteilen der weiteren Verbundplatte angeordnet ist. Damit können auch Verlagerungen der Verankerungsteile der Verbundplatten zueinander gleichzeitig mit dem Anschlagteil aufgefangen werden.

Nach einer weiteren bevorzugten Ausführungsform der Erfindung ist vorgesehen, daß der Anschlagteil durch ein die Stirnseite einer Verbundplatte winkelig, insbesonders u-förmig umfassendes Profil gebildet ist, welches einen in Richtung der weiteren Verbundplatte gerichteten parallel zur Stirnseite der Verbundplatte verlaufenden Schenkel aufweist, der mit einem in Richtung der weiteren Verbundplatte verlaufenden Vorsprung, z.B. einem in Längsrichtung des Profils verlaufenden Steg, versehen ist, wobei vorzugsweise dessen der äußeren Deckschichte zugewandte Längsseite in etwa parallel zu den Deckschichten verläuft und die der inneren Deckschichte zugewandte Längsseite gegenüber den Deckschichten geneigt ist. Diese Gestaltung ermöglicht in einfacher Weise ein Beschneiden bzw. Besäumen der Verbundplatten nach deren Fertigung sowie erspart die Herstellung von Aussparungen in den einzelnen Verbundplatten.

Weiters ist es möglich, daß dem mit dem Vorsprung versehenen Schenkel ein Gegenteil zugeordnet ist, der mit der weiteren Verbundplatte verbunden ist und eine dem Vorsprung entsprechende gegengleiche Vertiefung aufweist, wodurch eine gute Krafteinleitung über eine größere Fläche in die zu verbindende Verbundplatte erzielt wird.

Erfindunggemäß ist es auch möglich, daß der Gegenteil einen L- bzw. u-förmigen Querschnitt aufweist, wobei vorzugsweise der den beiden einander zugewandten Deckschichten der beiden Verbundplatten zugewandte Schenkel über eine Schwächungsstelle mit dem der Stirnseite der weiteren Verbundplatte zugeordneten Schenkel verbunden ist. Die Ausgestaltung des Profils und dessen Gegenteiles ermöglicht die Einsparung eines Schutzwinkels, da das Profil und der Gegenteil gleichzeitig die Funktion des Schutzwinkels übernehmen können. Darüberhinaus ist durch die Anordnung einer Schwächungsstelle mit der der innere Schenkel entfernt werden kann, eine Anpassung an unterschiedliche Dicken der Verbundplatten möglich. Dadurch können das Profil und der Gegenteil für

- 10 -

Verbundplatten unterschiedlicher Dicke eingesetzt werden. Ein dazu hergestellter Formteil ist daher vielfältig verwendbar, wodurch Kosteneinsparungen erzielt werden.

Vorteilhaft ist es weiters, wenn der Gegenteil einen Längsaufnahmeschlitz aufweist und daß dem Längsaufnahmeschlitz ein mit einer Schnappleiste versehenes Winkelprofil zugeordnet ist. Dadurch kann das Winkelprofil nach dem Zusammensetzen der Verbundplatten von der Innenseite her eingebaut werden und es ist in einfacher Weise möglich, durch Winkelteile mit in verschiedenen Abstand von diesen angeordneten Schnappleisten dieses Systems bei der Verbindung unterschiedlich dicker Verbundplatten einzusetzen.

Schließlich ist es auch möglich, Kabinen, deren Verbundplatten mit erfindungsgemäßen Verstärkungsteilen ausgestattet sind, insbesondere Kabinen für einen LKW-Aufbau, der aus mehreren ebenflächigen Verbundplatten zusammengesetzt wird, gemäß einem Verfahren nach der Erfindung zu montieren. Dieses Verfahren ist dadurch gekennzeichnet, daß auf die zugeschnittenen Verbundplatten Bohrlehren aufgelegt werden, daß danach die Bohrungen in den Verankerungs- bzw. Verstärkungsteilen hergestellt und die Montageteile montiert werden, worauf die zu verbindenden Stirnseiten der Verbundplatten mit Kleber bestrichen und die einander zugewandten Stirnseiten der Verbundplatten aufeinandergestellt und die Montageteile in die Verankerungs- bzw. Verstärkungsteile der weiteren Verbundplatte eingeschoben werden, wonach insbesondere die Bohrungen in den Verankerungs- bzw. Verstärkungsteilen der weiteren Verbundplatte bzw. im Montageteil hergestellt werden und die kraftschlüssigen Verbindungselemente, insbesondere die Schrauben der Schraubverbindungen, montiert werden. Dieses Montageverfahren reduziert den Zeitaufwand bei der Herstellung von Kabinen unter Verwendung von erfindungsgemäßen Verstärkungsvorrichtungen, sodaß zu den Zeitvorteilen, die durch die Gestaltung der Verankerungs- bzw. Verstärkungsteile erreicht wird, auch noch Kosteneinsparungen beim Zusammenbau hinzukommen.

Zum besseren Verständnis der vorliegenden Erfindung ist diese im folgenden anhand der in Zeichnungen dargestellten Ausführungsbeispiele näher erläutert.

Es zeigen

Fig.1 eine Kabine mit erfindungsgemäßen Verstärkungsvorrichtungen in schaubildlicher Darstellung als Explosionszeichnung;

Fig.2 einen Übergangsbereich zwischen zwei aneinander stoßenden Verbundplatten im Bodenbereich der Kabine 1 gemäß Figur 1, geschnitten in Stirnansicht;

Fig.3 einen Übergangsbereich zwischen zwei aneinander stoßenden Verbundplatten im Dachbereich der Kabine 1 gemäß Figur 1, geschnitten in Stirnansicht;

Fig.4 den Übergangsbereich zwischen zwei Verbundplatten in Stirnansicht mit einer Ausführungsvariante einer erfindungsgemäßen Verstärkungsvorrichtung, teilweise geschnitten;

Fig.5 eine Ausführungsvariante einer erfindungsgemäßen Verstärkungsvorrichtung zwischen zwei Verbundplatten in Stirnansicht, teilweise geschnitten;

Fig.6 eine Kabine mit einer Ausführungsvariante für die erfindungsgemäßen Verstärkungsvorrichtungen in schaubildlicher Darstellung als Explosionszeichnung;

Fig.7 einen Übergangsbereich zwischen zwei aneinander stoßenden Verbundplatten im Dachbereich der Kabine 1 gemäß Figur 1, geschnitten in Stirnansicht;

Fig.8 eine Variante für den Übergangsbereich zwischen zwei
Verbundplatten in Stirnansicht geschnitten.

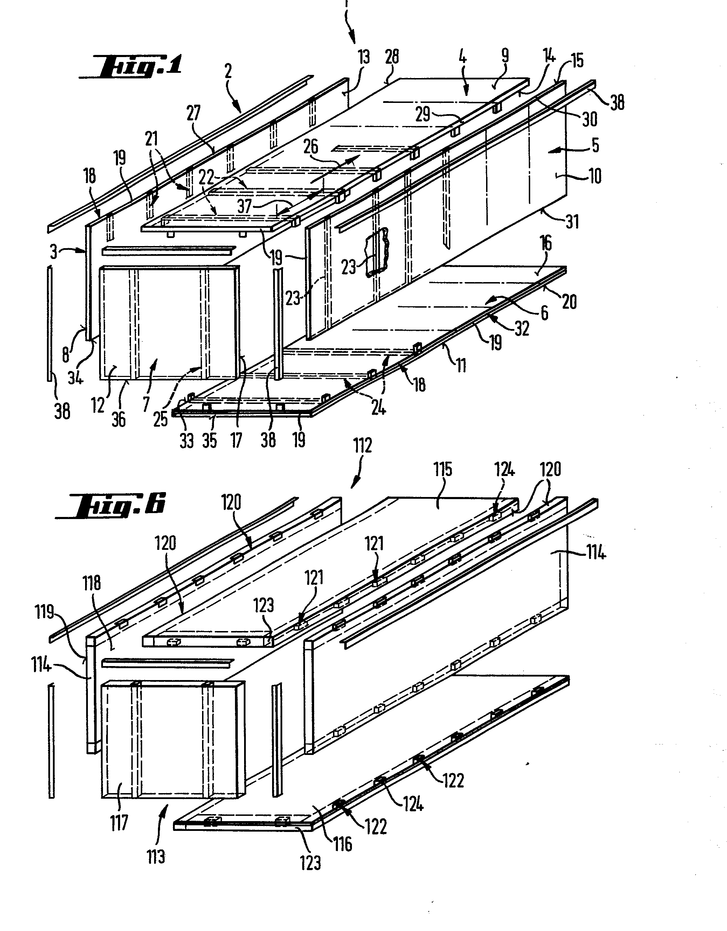

In Figur 1 ist eine Kabine 1 dargestellt, die einen Aufbau 2 für
einen Lastkraftwagen bildet. Dieser Aufbau 2 besteht aus mehreren
selbsttragenden Verbundplatten 3 bis 7, wobei die Verbundplatten 3
und 5 die Seitenwände, die Verbundplatte 4 das Dach, die
Verbundplatte 6 den Boden und die Verbundplatte 7 die Stirnwand des
Aufbaues 2 bilden.

Jede der Verbundplatten 3 bis 7 besteht aus einer äußeren
Deckschicht 8 bis 12 sowie einer inneren Deckschicht 13 bis 17.
Zwischen den beiden Deckschichten 8 bis 12 bzw. 13 bis 17 ist ein
Tragkern 18, der beispielsweise durch einen Kunststoff-Tragschaum 19
gebildet ist, angeordnet. Zwischen den beiden Deckschichten 8 bis 12
bzw. 13 bis 17 sind Verstärkungen 20 vorgesehen. Vor allem im
Bereich der den Boden bildenden Verbundplatte 6 sind zwischen dem
Tragkern 18 bzw. dem Kunststoff-Tragschaum 19 und der inneren
Deckschicht 16 Sperrholzplatten vorgesehen, um die Bodenbelastung
den gewünschten Bedürfnissen anpassen zu können.

In den Verbundplatten 3 bis 7 sind Verankerungsteile 21 bis 25
eingearbeitet. Diese Verankerungsteile sind in Längsrichtung - Pfeil
26 - der Verbindungsflächen 27,28; 29,30; 31,32; 33,34 und 35 bzw.
36 der Verbundplatten 3 bis 7 angeordnet. Beim vorliegenden
Ausführungsbeispiel sind die Verankerungsteile 21 bis 25 in
Längsrichtung - Pfeil 26 - der Verbindungsflächen 27 bis 36 im
Abstand 37 voneinander distanziert.

Zum Schutz der Verbindungsflächen 27 bis 36 im Übergangsbereich der
Verbundplatten 3 bis 7 sind diese Übergangsbereiche zusätzlich durch
Schutzwinkel 38 abgedeckt, die nach dem Zusammenbau der
Verbundplatten 3 bis 7 zu einem Aufbau montiert werden. Diese Schutzwinkel können mit Kleber auf den äußeren Deckschichten 8 bis 12 aufgeklebt bzw. zusätzlich mit diesen vernietet bzw. verschraubt sein.

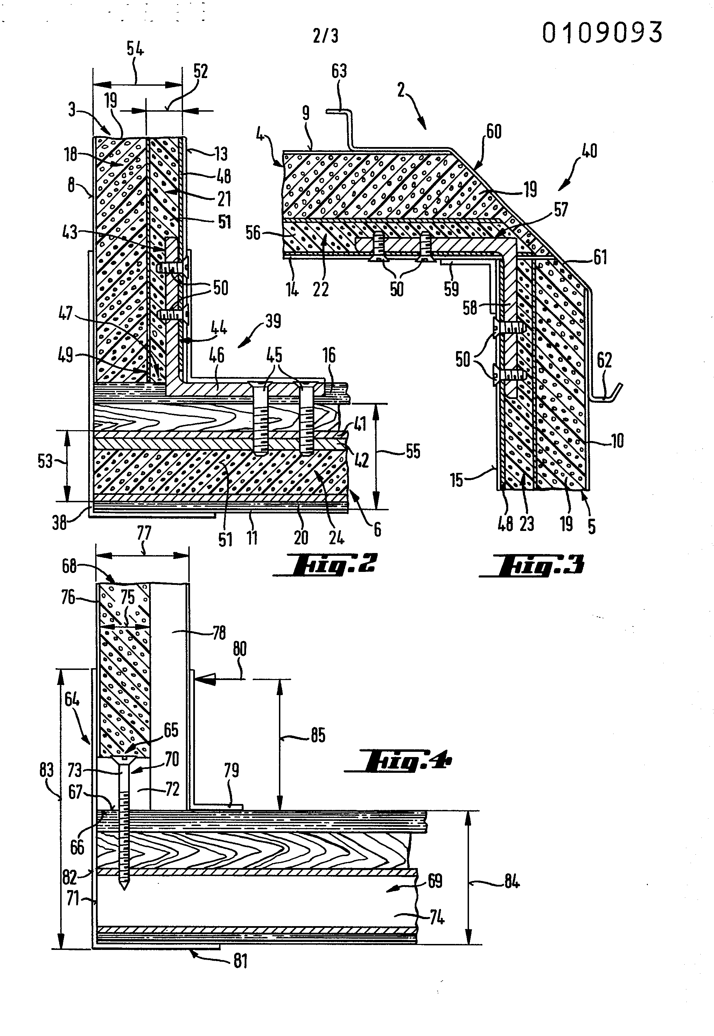

In Figur 2 und 3 sind die Übergangsbereiche 39 und 40 zwischen Verbundplatten 6 und 3 bzw. 4 und 5 dargestellt.

Wie aus der Darstellung in Figur 2 ersichtlich, besteht die die Bodenplatte des Aufbaues 2 bildende Verbundplatte 6 aus der äußeren Deckschicht 11 und der inneren Deckschicht 16. Die äußere Deckschicht 11 wird durch eine glasfaserverstärkte Polyesterplatte, die innere Deckschicht 16 durch eine Sperrholzplatte gebildet. Der äußeren Deckschicht 11 unmittelbar benachbart ist die Verstärkung 20, z.B. eine Sperrholzplatte, angeordnet, um die punktweise Krafteinleitung im Bereich der Befestigungsstellen auf eine größere Fläche zu verteilen. Der den Tragkern 18 bildende Kunststoff-Tragschaum 19 ist zur Aufnahme eines Verankerungsteiles 24 ausgenommen. Dieser Verankerungsteil 24 wird durch ein Formrohr 41, insbesondere aus Metall bzw. glasfaserverstärktem Kunststoff gebildet, welches durch eine Einlage, 42, beispielsweise ein Flachmaterial aus Metall bzw. hochfestem Kunststoff, verstärkt ist. In die innere Deckschicht 16 ist ein Montageteil 43, ein Winkel 44, z.B. aus Flachprofil, versenkt eingearbeitet. Der Winkel 44 ist über Schraubverbindungen 45 mit dem Formrohr 41 kraftschlüssig verbunden. Ein Schenkel 46 des Winkels 44 ragt in eine Aufnahmeöffnung 47 eines Verankerungsteiles 21, der durch ein Formrohr 48 gebildet wird. Diese Aufnahmeöffnung 47 ist in einem der Verbundplatte 6 zugewandten Endbereich 49 des Formrohres 48 vorgesehen. Die Verbindung zwischen dem Montageteil 43 und dem Formrohr 48 erfolgt über Schraubverbindungen 50. Der Übergangsbereich 39 zwischen den beiden Verbundplatten 3 und 6 wird durch den Schutzwinkel 38 abgedeckt, wodurch die offene Stirnseite der den Boden bildenden Verbundplatte 6 zusätzlich vor mechanischen Beschädigungen geschützt ist. Um Korrosionserscheinungen in den Formrohren 41 und 48 zu vermeiden bzw. die Festigkeit der Verbundplatten noch zusätzlich zu erhöhen, können diese mit einem Kunststoffschaum 51 ausgeschäumt sein. Bei der Verbundplatte 3 ist dem Verankerungsteil 21 die innere Deckschicht 13 unmittelbar benachbart, die durch eine glasfaserverstärkte Polyesterplatte gebildet wird. Gleichfalls wird die äußere Deckschicht 8 ebenfalls durch eine glasfaserverstärkte Polyesterplatte gebildet. Zwischen den beiden Deckschichten 8 bzw. 13 ist als Tragkern 18 ein Kunststoff-Tragschaum 19, z.B. geschäumtes Polystyrol oder ähnliches, angeordnet.

Wie weiters der Darstellung in Figur 2 zu entnehmen ist, ist eine Dicke 52 bzw. 53 der Verankerungsteile 21 bzw. 24 geringer als eine Distanz 54 bzw. 55 zwischen den Deckschichten 8,13 bzw. 11,16 der Verbundplatten 3 bzw. 6.

Weiters ist es vorteilhaft, wenn die Schraubverbindungen 45 bzw. 50 auf den einander zugewandten Seiten der Verbundplatten 3 bzw. 6, also im Bereich der inneren Deckschichten 13 bzw. 16 vorgesehen sind. Dadurch werden bei Kühlaufbauten Kältebrücken vermieden und es wird zusätzlich ein Eindringen von Feuchtigkeit von außen her verhindert. Wie schematisch angedeutet, kann bei besonders stark beanspruchten Kabinen bzw. Aufbauten der Bereich der Schraubverbindungen 45 bzw. 50 durch einen zusätzlichen Winkel geschützt werden, um Beschädigungen der Köpfe der zur Verwendung gelangenden Schrauben zu vermeiden. Für die Schraubverbindungen 45 bzw. 50 können sowohl Gewindeschrauben mit Senkkopf als auch mit Sechskantkopf bzw. selbstschneidende Schrauben mit und ohne Kreuzschlitz bzw. Innensechskant zur Verwendung gelangen.

In Figur 3 ist der Übergangsbereich 40 zwischen den Verbundplatten 4 und 5, also dem Dach bzw. der Seitenwand eines Aufbaues 2 gezeigt. Die Verankerungsteile 22 bzw. 23 werden durch Formrohre 48 bzw. 56 gebildet. Als Montageteil 57 ist ein Winkel 58 angeordnet, der über Schraubverbindungen 50 mit den Formrohren 48 bzw. 56 verbunden ist. Die äußeren bzw. inneren Deckschichten 9,10 bzw. 14,15 sind durch glasfaserverstärkte Polyesterplatten gebildet. Zwischen den Deckschichten 9,14; 10,15 ist ein Kunststoff-Tragschaum 19 angeordnet. Zwischen den beiden inneren Deckschichten 14,15 kann im Übergangsbereich 40 ein Winkel 59 angeordnet sein. Die Formrohre 48 bzw. 56 sind zur Erhöhung der Festigkeit und zur Vermeidung von Kondenswasserbildung ausgeschäumt.

Weiters ist gezeigt, daß es möglich ist den Übergangsbereich 40 durch einen Schutzwinkel 60 abzudecken, der zwischen den parallel zu den Verbundplatten 4 bzw. 5 verlaufenden Schenkeln eine schräge Fläche 61 aufweist, die zu beiden Deckschichten 10 bzw. 9 der aneinanderstoßenden Verbundplatten 4,5 schräg verläuft. Im vorliegenden Ausführungsbeispiel beträgt dieser Winkel 45°.

Diese schräge Fläche 61 kann aus optischen Gründen aber beispielsweise auch um ein gewisses Lichtraumprofil einzuhalten, vorgesehen werden. Überdies ist es möglich den Schutzwinkel 60 mit einer angeformten Regenleiste 62 und einem Tragprofil 63 zu versehen. Durch diese zusätzlichen Versteifungen kann dieses Profil höhere Verwindungskräfte aufnehmen, sodaß der Übergangsbereich 40 zusätzlich versteift wird.

In Figur 4 ist eine Verstärkungseinrichtung 64 gezeigt, bei der ein Verankerungsteil 65 einen parallel zu Verbindungsflächen 66,67 zwischen zwei Verbundplatten 68,69 parallel verlaufenden Anschlagteil 70 aufweist. Dieser Anschlagteil 70 wird durch eine, zu einer Stirnseite 71 der Verbundplatte 69 fluchtend und parallel angeordnete Anschlagleiste 72 gebildet. Die Anschlagleiste 72 ist über eine Schraubverbindung 73 mit der Verbundplatte 69, im vorliegenden Fall z.B. mit einem in dieser eingearbeiteten Verankerungsteil 74 kraftschlüssig verbunden.

Eine Breite 75 der Anschlagleiste 72 senkrecht zu einer äußeren Deckschicht 76 der Verbundplatte 68 ist geringer als eine Wandstärke 77 dieser Verbundplatte 68. Weiters ist die Anschlagleiste 72 zwischen der äußeren Deckschicht und einem in der Verbundplatte 68 angeordneten Verankerungsteil 78 angeordnet. Der Übergansbereich zwischen den beiden Verbundplatten 68,69 ist im Bereich der inneren Deckschichten mit einem Winkel 79 abgedeckt. Wie ersichtlich, kann bei einem Einwirken einer großen seitlichen Kraft - wie dies beispielsweise beim Transport von Rollcontainern oder Paletten der Fall ist - dieser Winkel 79 bis in den Bereich des Angriffspunktes dieser Kraft 80 hochgezogen sein, um eine bessere Krafteinleitung über die Längsrichtung des Aufbaues auf die darin vorgesehenen Verankerungsteile 78 bzw. in weiterer Folge auf die Anschlagleiste 72 zu erreichen. Bevorzugt ist dabei ein äußerer Schutzwinkel 81 mit einem Schenkel 82 versehen, dessen Länge 83 einer Dicke 84 der Verbundplatte 69 sowie eines Abstandes 85 zwischen der inneren Deckschicht der Verbundplatte 69 und dem Angriffspunkt der Kraft 80 entspricht.

Der Vorteil der erfindungsgemäßen Lösung in Verbindung mit der Anschlagleiste 72 liegt darin, daß beim Einwirken einer seitlichen Kraft beim Transport von sich im Aufbau bewegenden Gütern diese ständigen Kraftimpulse, die durch Federbewegungen sowie Wank- und Schlingerbewegungen des Aufbaues hervorgerufen werden, gleichmäßig über die gesamte Längsrichtung der von beiden Seiten - der Außen- und der Innenseite - eingespannten Verbundplatten übertragen werden. Überdies kann es zu keinen Scherkräften aufgrund eines Momentes zwischen dem Angriffspunkt der Kraft 80 und dem oberen Ende des Schenkels 82 des Schutzwinkels 81 kommen. Dadurch kann ein Großteil von Schäden, die vor allem bei Kunststoffaufbauten die aus Verbundplatten zusammengesetzt sind, auftreten, vermieden werden. Diese Beanspruchungen kommen vor allem dort deshalb sehr stark zum Tragen, da durch die vorgeschriebene große Innenbreite und die damit verbundene dünne Wandstärke sowie der hohen Beanspruchungen die beim Beladen der Aufbauten mittels Paletten unter Verwendung von Hubstaplern bzw. beim Transport von Rollcontainern auftreten, diese Verbundplatten oft über die Belastungsgrenze hinaus beansprucht werden.

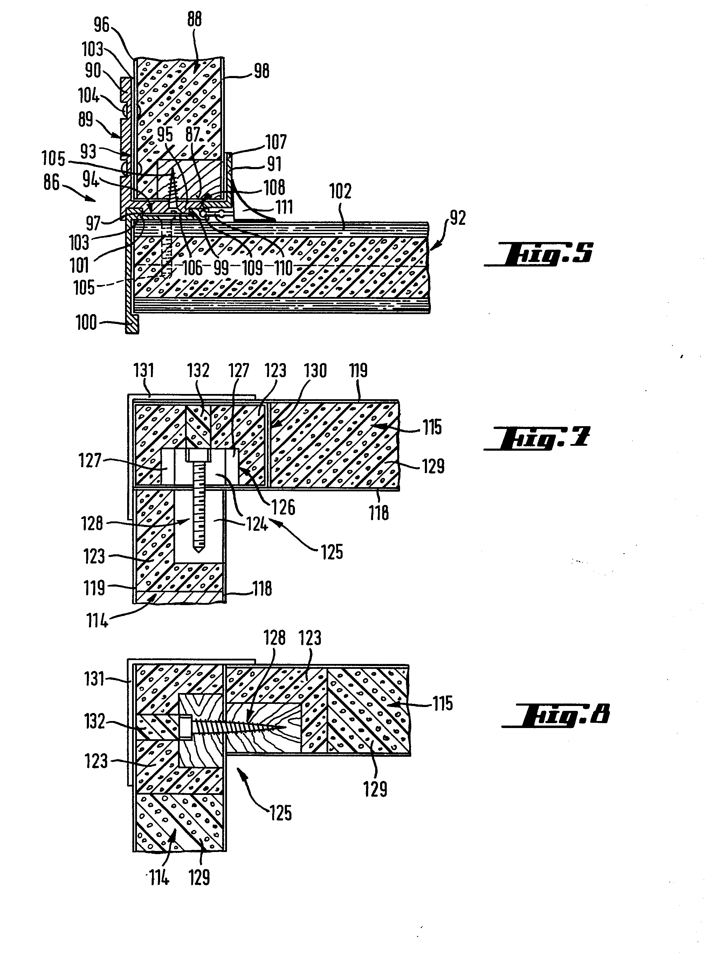

In Figur 5 ist eine weitere Ausführungsform eines Anschlagteiles 86 gezeigt. Bei diesem wird eine Stirnseite 87 einer Verbundplatte 88 von einem Profil 89 u-förmig umfaßt. Dieses Profil 89 kann aus zwei Profilteilen 90,91 bestehen. Bei Verwendung dieses Profiles 89 für Kühlaufbauten kann zumindest der innere Profilteil 91 aus einem schlecht wärmeleitenden Kunststoff gebildet sein. Bevorzugt werden als Materialien für dieses U-Profil Aluminium bzw. glasfaserverstärkte Polyester-Profile eingesetzt. Das u-förmige Profil weist einen in Richtung einer weiteren Verbundplatte 92 gerichteten parallel zur Stirnseite 87 der Verbundplatte 88 verlaufenden Schenkel 93 auf. In Richtung der weiteren Verbundplatte 92 ist auf dem Schenkel 93 ein in dessen Längsrichtung verlaufender Vorsprung 94 vorgesehen. Der Vorsprung 94 ist als Steg 95 ausgebildet, dessen einer äußeren Deckschicht 96 zugewandte Längsseite 97 parallel zu dieser äußeren Deckschicht 96 verläuft, während die einer inneren Deckschicht 98 zugewandte Längsseite 99 zu den Deckschichten 96,98 schräg verläuft.

Dem Profil 89 ist ein mit der Verbundplatte 92 verbundener Gegenteil 100 zugeordnet. Ein Schenkel 101 dieses bevorzugt als Winkel ausgebildeten Gegenteiles 100 liegt auf einer inneren Deckschicht 102 der Verbundplatte 92 auf und ist ebenso wie das Profil 89 über Kleber 103 bzw. mechanische Befestigungsmittel 104,105 mit den Verbundplatten 88,92 kraftschlüssig verbunden. Der Schenkel 101 des Gegenteiles 100 ist mit einer Vertiefung 106 versehen, dessen Tiefe und Breite im wesentlichen den Abmessungen des Steges 95 des Profiles 89 entspricht.

Der Profilteil 90 kann mit dem Profilteil 91, von dem ein Schenkel 107 an der inneren Deckschicht 98 der Verbundplatte 88 anliegt, über eine Schwächungsstelle 108 mit dem der Stirnseite 87 zugeordneten Schenkel 93 verbunden sein. Dies schafft die Möglichkeit, daß bei Verbundplatten 88 mit größerer Dicke der Profilteil 91 vom Profilteil 90 abgebrochen und das Profil 89 für unterschiedlich dicke Verbundplatten 88 eingesetzt werden kann. Weiters ist es möglich, daß der Gegenteil 100 mit einem Längsaufnahmeschlitz 109 versehen wird. In diesem Längsaufnahmeschlitz kann ein mit einer Schnappleiste 110 ausgestattetes Winkelprofil 111 eingeklemmt werden. Diese Ausführungsform ist dann von Vorteil, wenn der Profilteil 91 bei dickeren Verbundplatten 88 in Wegfall kommt, sodaß die Distanz zwischen der Stirnseite 87 der Verbundplatte 88 und der inneren Deckschicht 102 der Verbundplatte 92 im Eckbereich verschlossen ist. Durch Verwendung von Winkelprofilen 111 mit unterschiedlich langen, gegen den Gegenteil 100 zu gerichteten Stegen ist es möglich, mit einem Gegenteil 100 und verschiedenartig gestalteten Winkelprofilen 111 bei unterschiedlich dicken, zur Verwendung gelangenden Verbundplatten das Auslangen zu finden.

In Figur 6 ist eine Ausführungsvariante einer Kabine 112 gezeigt. Diese Kabine 112 bildet einen Aufbau 113 für einen Lastkraftwagen. Dieser Aufbau 113 wird aus Verbundplatten 114, die die Seitenwände bilden, einer Verbundplatte 115 bzw. 116, die das Dach bzw. den Boden bilden und einer Verbundplatte 117, die die Stirnwand bildet, zusammengesetzt. Jede der Verbundplatten 114 bis 177 besteht aus einer inneren Deckschicht 118 und einer äußeren Deckschicht 119. Im Bereich von Verbindungsflächen 120 sind Verankerungsteil 121,122 angeordnet. Diese Verankerungsteile bestehen aus einem Kunststoffschaumblock 123 in dem Verstärkungsteile 124 eingeschäumt sind. Diese Verstärkungsteile können durch Metall- oder Holzteile bzw. Klötze aus hochfestem bzw. ausreißfestem Kunststoff gebildet sein.

In Figur 7 ist ein Schnitt durch einen Übergangsbereich 125 zwischen einer Verbundplatte 114 und einer Verbundplatte 115 gezeigt. Wie ersichtlich, sind in den Kunststoffschaumblock 123 Verstärkungsteile 124 aus Kunststoff eingeschäumt die mit Ausreißankern 126, z.B. Querstegen 127, versehen sind. Durch die Anordnung dieser Ausreißanker 126 wird eine intensivere Verbindung zwischen den Verstärkungsteilen 124 und dem Kunststoffschaumblock 123 erreicht. Die Verbindung der beiden Verbundplatten 114,115 erfolgt mittels einer Schraubverbindung 128. Der Kopf der Schraube liegt auf dem der Verbundplatte 115 zugeordneten Verstärkungsteil 124 auf, während das Gewinde im Verstärkungsteil 124 der Verbundplatte 114 verankert ist. Der Kunststoffschaumblock weist, um eine hohe Ausreißfestigkeit der Verstärkungsteile zu erreichen, eine Dichte auf, die höher ist als die Dichte des zwischen den Deckschichten 118 und 119 angeordneten Tragschaumes 129, insbesondere mehr als 80 kg/m$^3$. Von Vorteil ist es hierbei, wenn als Kunststoffschaum ein Hartintegral-Polyurethan-Kunststoffschaum verwendet wird. Weiters ist es von Vorteil, wenn der Kunststoffschaumblock, wie schematisch angedeutet, mit einer rauhen Oberfläche ausgestaltet wird oder in eine zur Herstellung einer guten Klebeverbindung mit dem benachbarten Tragschaum bzw. mit den Deckplatten in eine geeignete Folie 130 eingeschäumt ist. Von Vorteil ist es auch bei dieser Ausführungsform, wenn die Dicke der Verstärkungsteile 124 geringer ist als die Dicke der Kunststoffschaumblöcke 123 bzw. der Verbundplatten 114 bzw. 115, da dadurch vor allem bei der Verwendung einer derartigen Kabine als Kühlaufbau Kältebrücken zwischen der inneren und äußeren Deckschicht vermieden werden. Der Übergangsbereich zwischen den Verbundplatten 114,115 wird durch einen Schutzwinkel 131 abgedeckt. Die in der Verbundplatte 115 vorgesehene Bohrung zum Einbringen der Schraubverbindung 128 wird - wie schematisch angedeutet - nach dem Einbringen der Schraubverbindung mit einem Füllmaterial 132, insbesondere einem Kunststoffschaum, verschloßen.

In Figur 8 ist derselbe Übergangsbereich 125 dargestellt wie in Figur 7, jedoch stoßen die Verbundplatten 114,115 derart aneinander, daß die Schraubverbindung 128 die Verbundplatte 114 durchdringt.

Es werden daher für gleiche Teile gleiche Bezugszeichen verwendet.

Diese Anordnung der Schraubverbindung 128 hat den Vorteil, daß auf dem Dach (Verbundplatte 115) stehendes Wasser durch die Kapillarwirkung, die bei einem längeren Betrieb durch Relativbewegungen zwischen den Verbundplatten 114 und 115 sowie dem

0109093

Schutzwinkel 131 entstehen können, vermieden werden. Damit kann über einen langen Zeitraum eine Dichtheit einer Kabine mit den erfindungsgemäßen Verankerungsteilen erhalten werden.

Im Rahmen der Erfindung kann die Ausbildung der Verankerungs- bzw. Verstärkungsteile bzw. Montageteile anhand unterschiedlicher Materialien bzw. technischer Möglichkeiten erfolgen.

Patentansprüche

1. Verstärkungsvorrichtung für Kabinen, insbesondere Aufbauten auf Lastkraftwagen, die aus mehreren selbsttragenden Verbundplatten zusammengesetzt sind, die je eine äußere und innere Deckschicht aufweisen, zwischen welchen ein Tragkern, insbesondere ein Kunststoff-Tragschaum angeordnet ist, in dem Verstärkungen eingearbeitet sind, dadurch gekennzeichnet, daß in Längsrichtung (26) der Verbindungsflächen (27-36;66,67;120) der Verbundplatten- (3-7;68,69;88,92;114-117), insbesondere in deren Übergangsbereich, Verankerungsteile (21-25;65,78;121,122) vorgesehen sind, die zumindest mit einer der beiden Deckschichten (8-17;76,96,98,102; 118,119) und gegebenenfalls dem Tragschaum (19,129) verbunden und zur Aufnahme kraftschlüssiger Verbindungselemente (45,50) ausgebildet sind.

2. Verstärkungsvorrichtung nach Anspruch 1, dadurch gekennzeichnet, daß mehrere in Längsrichtung (26) der Verbindungsflächen (27-36;66,67;120) voneinander distanziert angeordnete Verankerungsteile (21-25;65,78;121,122) vorgesehen sind.

3. Verstärkungsvorrichtung nach Anspruch 1 oder 2, dadurch gekennzeichnet, daß die Verankerungsteile (21-25;65,78;121,122) aus einem nichtmetallischen Werkstoff mit hoher Ausreißfestigkeit, z.B. Holz, Polyamid oder dgl. bestehen.

4. Verstärkungsvorrichtung nach einem der Ansprüche 1 bis 3, dadurch gekennzeichnet, daß die Verankerungsteile (121,122) durch einen Kunststoff-Schaumblock (123) gebildet sind, in dem Verstärkungsteile (124) zur Aufnahme der kraftschlüssigen Verbindungselemente eingeschäumt sind.

5. Verstärkungsvorrichtung nach einem der Ansprüche 1 bis 4, dadurch gekennzeichnet, daß die Verankerungs- bzw. Verstärkungsteile (21,24;124) senkrecht zu den Deckschichten (8,13,11,16;118,119) eine geringere Dicke (52,53) aufweisen als eine Distanz (54,55) zwischen den beiden Deckschichten 8,13,11,16;118,119) und vorzugsweise zumindest einen Teil einer Außenfläche des Verankerungsteiles (121,122) bilden.

6. Verstärkungsvorrichtung nach einem der Ansprüche 1 bis 5, dadurch gekennzeichnet, daß die Verstärkungsteile (124) durch in den Kunststoff-Schaumblock (123) eingeschäumte Metallteile gebildet sind.

7. Verstärkungsvorrichtung nach einem der Ansprüche 1 bis 6, dadurch gekennzeichnet, daß die Verstärkungsteile (124) durch Platten, Rohre oder Winkel aus Metall bzw. Kunststoff gebildet sind und vorzugsweise mit Ausreißankern (126), die aus Querstegen (127), Laschen oder Vorsatzteilen bestehen, versehen sind.

8. Verstärkungsvorrichtung nach einem der Ansprüche 1 bis 7, dadurch gekennzeichnet, daß der Kunststoff-Schaumblock (123) zumindest eine Dichte aufweist, die höher ist als die des Tragschaumes (19,129), insbesondere höher als 80 kg/m$^3$ und vorzugsweise aus einem Hartintegral-Polyurethanschaum besteht.

9. Verstärkungsvorrichtung nach einem der Ansprüche 1 bis 8, dadurch gekennzeichnet, daß der Kunststoff-Schaumblock (123) mit einer rauhen Oberfläche ausgebildet ist, oder in eine zur Aufnahme des Klebers (103) geeignete Folie (130) eingeschäumt ist.

10. Verstärkungsvorrichtung nach einem der Ansprüche 1 bis 9, dadurch gekennzeichnet, daß die Verankerungs- und bzw. oder Verstärkungsteile (121,122;21-25) zweier zu verbindender Verbundplatten (3-7) quer zur Verbundplattenlängsrichtung verlaufen sowie im selben Querschnittsbereich angeordnet sind und daß zumindest einer der Verankerungs- und bzw. oder Verstärkungsteile (121,122;21-25) in deren einander zugewandten Endbereichen (49) der Verbundplatten (3-7,114-117) eine Aufnahmeöffnung (47) für einen Montageteil (43) aufweist.

11. Verstärkungsvorrichtung nach einem der Ansprüche 1 bis 10, dadurch gekennzeichnet, daß der Montageteil (43) durch einen Winkel (44), insbesondere aus einem Flachprofil, gebildet und über Schraubverbindungen (45,50) mit den Verankerungs- und bzw. oder Verstärkungsteilen (121,122;21-25) verbunden ist.

12. Verstärkungsvorrichtung nach einem der Ansprüche 1 bis 11, dadurch gekennzeichnet, der Montageteil (43) durch einen Auflagebock gebildet ist, der mit einem, in seinen Abmessungen auf die Aufnahmeöffnungen (47) abgestellten Führungsteil versehen ist.

13. Verstärkungsvorrichtung nach einem der Ansprüche 1 bis 12, dadurch gekennzeichnet, daß die Schraubverbindungen (45,50) auf den einander zugewandten Seiten der unmittelbar benachbarten Verbundplatten (3,4;4,5;5,6;6,3) angeordnet sind.

14. Verstärkungsvorrichtung nach einem der Ansprüche 1 bis 13, dadurch gekennzeichnet, daß der Übergangsbereich (39,40;125) zwischen den Verbundplatten (3-7;114-117) mit einem Schutzwinkel (38,60,81) abgedeckt ist, der im Endbereich eine schräge Fläche (61) aufweist, die gegenüber den Deckschichten (9,10) unter einem Winkel von 45° geneigt ist.

15. Verstärkungsvorrichtung nach einem der Ansprüche 1 bis 14, dadurch gekennzeichnet, daß der Verankerungsteil (65) einen parallel zu den Verbindungsflächen (66,67) verlaufenden Anschlagteil (70) aufweist, der mit einer der Verbundplatten (69) kraftschlüssig verbunden ist, und daß die unmittelbar benachbarte Verbundplatte (68) mit einer Ausnehmung zur Aufnahme des Anschlagteiles (70) versehen ist und daß der Anschlagteil (70) vorzugsweise distanziert von den beiden einander zugewandten Deckschichten der einander unmittelbar benachbarten Verbundplatten (68,69) angeordnet ist.

16. Verstärkungsvorrichtung nach einem der Ansprüche 1 bis 15, dadurch gekennzeichnet, daß der Anschlagteil (70) durch eine zur Stirnseite (71) einer Verbundplatte (69) fluchtend angeordnete Anschlagleiste (72) gebildet ist, die mit dieser kraftschlüssig verbunden ist, und daß die Breite (75) der Anschlagleiste (72) senkrecht zur Deckschichte (76) einer weiteren Verbundplatte (68) geringer ist als deren Wandstärke (77).

17. Verstärkungsvorrichtung nach einem der Ansprüche 1 bis 16, dadurch gekennzeichnet, daß die Anschlagleiste (72) zwischen der äußeren Deckschicht (76) und den von dieser distanzierten Verankerungsteilen (78) der weiteren Verbundplatte (68) angeordnet ist.

18. Verstärkungsvorrichtung nach einem der Ansprüche 1 bis 17, dadurch gekennzeichnet, daß der Anschlagteil (86) durch ein die Stirnseite (87) einer Verbundplatte (88) winkelig, insbesondere u-förmig umfassendes Profil (89) gebildet ist, welches einen in Richtung der weiteren Verbundplatte (92) gerichteten parallel zur Stirnseite (87) der Verbundplatte (88) verlaufenden Schenkel (93) aufweist, der mit einem in Richtung der weiteren Verbundplatte (92) verlaufenden Vorsprung (94), z.B. einem in Längsrichtung des Profils (89) verlaufenden Steg (95) versehen ist, wobei vorzugsweise dessen der äußeren Deckschichte (96) zugewandte Längsseite (97) in etwa parallel zu den Deckschichten (98) verläuft und die der inneren Deckschichte (98) zugewandte Längsseite (99) gegenüber den Deckschichten (96,98) geneigt ist.

19. Verstärkungsvorrichtung nach einem der Ansprüche 1 bis 18, dadurch gekennzeichnet, daß dem mit dem Vorsprung (94) versehenen Schenkel (93) ein Gegenteil (100) zugeordnet ist, der mit der weiteren Verbundplatte (92) verbunden ist und eine dem Vorsprung (94) entsprechende gegengleiche Vertiefung (106) aufweist.

20. Verstärkungsvorrichtung nach einem der Ansprüche 1 bis 19, dadurch gekennzeichnet, daß der Gegenteil (100) einen L- bzw. u-förmigen Querschnitt aufweist, wobei vorzugsweise der den beiden einander zugewandten Deckschichten (98,102) der beiden Verbundplatten (88,92) zugewandte Schenkel (93) über eine Schwächungsstelle (108) mit dem der Stirnseite der weiteren Verbundplatte (92) zugeordneten Schenkel verbunden ist.

21. Verstärkungsvorrichtung nach einem der Ansprüche 1 bis 20, dadurch gekennzeichnet, daß der Gegenteil (100) einen Längsaufnahmeschlitz (109) aufweist und daß dem Längsaufnahmeschlitz (109) ein mit einer Schnappleiste (110) versehenes Winkelprofil (111) zugeordnet ist.

22. Verfahren zur Montage einer Kabine, insbesondere für einen LKW-Aufbau, der aus mehreren ebenflächigen Verbundplatten zusammengesetzt wird, die mit Verstärkungsteilen nach einem der Ansprüche 1 bis 20 versehen sind, dadurch gekennzeichnet, daß auf die zugeschnittenen Verbundplatten (3 bis 7) Bohrlehren aufgelegt werden, daß danach die Bohrungen in den Verankerungs- bzw. Verstärkungsteilen (21 bis 25) hergestellt und die Montageteile (43) montiert werden, worauf die zu verbindenden Stirnseiten der Verbundplatten (3 bis 7) mit Kleber bestrichen und die einander zugewandten Stirnseiten der Verbundplatten (3 bis 7) aufeinandergestellt und die Montageteile (43) in die Verankerungs- bzw. Verstärkungsteile (21 bis 25) der weiteren Verbundplatte (3 bis 7) eingeschoben werden, wonach insbesondere die Bohrungen in den Verankerungs- bzw. Verstärkungsteilen (21 bis 25) der weiteren Verbundplatte ( 3 bis 7) bzw. im Montageteil (43) hergestellt werden und die kraftschlüssigen Verbindungselemente, insbesondere die Schrauben der Schraubverbindungen (45,50) montiert werden.

Hutter & Schrantz
Bautechnik Gesellschaft m.b.H.
durch

(Dr. Wolke)

Fig.1

Fig.6

1/3

0109093

0109093

**Fig.2**

**Fig.3**

**Fig.4**

0109093

Fig.5

Fig.7

Fig.8

Europäisches
Patentamt

# EUROPÄISCHER RECHERCHENBERICHT

Nummer der Anmeldung

EP 83 11 1452

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 245 504 (BUHLER)<br><br>* Seite 2, Zeilen 16-32; Seite 3, Zeilen 1-5; Seite 3, Zeilen 24-29; Abbildungen 1-3,6 *<br><br>--- | 1-3,5, 10 | B 62 D 29/04 |
| X | US-A-4 032 680 (ALLARD)<br><br>* Spalte 1, Zeile 66 - Spalte 2, Zeile 21; Abbildungen 1,2 *<br><br>--- | 1,2,6, 7 | |
| A | DE-A-2 264 380 (SCHAFFARA)<br>* Abbildung 2 *<br><br>--- | 11,13 | |
| A | US-A-3 149 877 (HOTTENROTH et al.)<br>* Abbildung 5 *<br><br>--- | 14 | |
| A | US-A-3 113 401 (ROSE)<br>* Spalte 2, Zeilen 5-22; Abbildungen 1-5 *<br><br>----- | 18,19 | RECHERCHIERTE SACHGEBIETE (Int. Cl. ³)<br><br>B 62 D 29/04<br>B 60 P 3/20<br>B 65 D 90/00<br>E 04 C 2/00<br>B 61 D 17/00 |

Der vorliegende Recherchenbericht wurde für alle Patentansprüche erstellt.

| Recherchenort | Abschlußdatum der Recherche | Prüfer |
|---|---|---|
| DEN HAAG | 25-01-1984 | OSBORNE J. |